# EUROPEAN PATENT APPLICATION

(11) **EP 4 012 566 A1**
(43) Date of publication of application: **15.06.2022**
(21) Application number: 21181488.4
(22) Date of filing: 24.06.2021
(51) Int. Cl.: G06F 11/36, G06F 9/445, G06F 8/71

(54) **METHOD FOR AN IMPROVED FIRMWARE DEPLOYMENT AND ITS USAGE IN EMBEDDED LOGIC**

(30) Priority: 11.12.2020 EP 20213564
(71) Applicant: Commsolid GmbH, 01099 Dresden (DE)
(72) Inventor: Höher, Martin, 01127 Dresden (DE)
(74) Representative: Lippert Stachow Patentanwälte Rechtsanwälte Partnerschaft mbB

(57) **Abstract**

The invention discloses a method for an improved firmware deployment for any hardware platform. It relates also to a method which used a special firmware deployment bundle for a hardware platform generated by the previous mentioned method. The objective to provide a method that can establish an improved firmware deployment for any kind of hardware platform, so that host tools or a test framework do not need to be updated regularly, and firmware can be easily distributed to any kind of hardware platform, will be solved by creating dedicated firmware images for the hardware platform by compiling and linking source files of an application on a host tool, building a firmware executable for the hardware platform, embedding additional information and hardware platform specific logic in the firmware images of said hardware platform, resulting in a special firmware deployment bundle, whereas the embedding is done by modifying executable and linkable format (ELF) files or by creating an archive file, and using the special firmware deployment bundle as an executable by the host tool for loading the firmware deployment onto the hardware platform and / or using it as an input for other host tools for firmware loading, debugging and / or test stimuli on the hardware platform.

## Description

The invention relates to a method for an improved firmware deployment for any hardware platform. It relates also to a method which uses a special firmware deployment bundle for a hardware platform generated by the previous mentioned method.

In computing, the Executable and Linkable Format (ELF), is a common standard file format for executable files, object code, shared libraries, and core dumps. It was quickly accepted among different vendors of Unix systems. In 1999, it was chosen as the standard binary file format for Unix and Unix-like systems on x86 processors by the 86open project.

By design, the ELF is flexible, extensible, and cross-platform. For instance, it supports different endiannesses and address sizes so it does not exclude any particular central processing unit (CPU) or instruction set architecture. This has allowed it to be adopted by many different operating systems on many different hardware platforms.

Each ELF file is made up of one ELF header, followed by file data. The data can include program header table, describing zero or more memory segments, section header table, describing zero or more sections and data referred to by entries in the program header table or section header table.

The segments contain information that is needed for run time execution of the file, while sections contain important data for linking and relocation. Any byte in the entire file can be owned by one section at most, and orphan bytes can occur which are unowned by any section.

The ELF file format can be seen as a basis for distributing compiled applications and embedded systems. In the domain of embedded application development, a developer often faces challenges interfacing with the overall system, i. e. hardware and firmware running on it. Usually, such a system is proprietary and - in order to protect the internals - utilizes mechanisms to prevent unauthorized third parties from interacting with it in an unconstrained way.

For example, during the development phase of such a system, it is desirable to be able to access the internal memories, read data directly from it or write into the memories to trigger actions, for example in the scope of a system test. However, such memory accesses are not wanted in an end user scenario. In order to allow access to developers, the system has to be brought into a "debug mode", which usually involves running through a predefined protocol and authenticating.

On the other side, especially during the very early development of such an embedded application, the concrete protocol might not be fixed: It might be brought up first, be slightly changed over time or even be redone entirely. This, however, poses challenges on accompanying tools which e. g. need to know this protocol and run through it in order to do their work. For example, a test framework which shall test the overall functionality of the application would first need to unlock the device before being able to do its testing. But whenever there is a change in the protocol, also that test framework must be updated.

Another typical challenge is with platforms for rapid application development. When designing an application which consists of hardware and software, it is common to prototype it using e. g. FPGAs. However, interfaces for enabling "debug mode" on an FPGA and later on dedicated hardware usually differ. Even more, an FPGA platform might require "special" treatment. For example, using ROM is a standard approach. While ROM content is created once and then put into hardware for the final product, an FPGA does not have such "fixed" contents. Instead, an application loader, which later on uploads the firmware into an FPGA prototype might have to take care to also load such ROM contents - which clearly is not the case when running on dedicated hardware.

The common issue with these use cases is variance: Depending on which concrete hardware platform and version is used, protocols and interfaces for doing the most basic interactions between a user/application and the system are different. The common approach to handle it is put additional logic into the applications which have to interact with a concrete device. However, this in turn has disadvantages, as then the tools must be updated regularly as otherwise interactions might not be possible or even might cause real damage, e. g. if there was a change in the protocol and an application on the host side still uses an old version of it, which then might cause e. g. wrong configurations to be written, in the worst case in a non-recoverable manner.

It is therefore an objective of the present invention to provide a method that can establish an improved firmware deployment for any kind of hardware platform, so that host tools or a test framework do not need to be updated regularly, which keeps maintenance effort low and firmware can be easily distributed to any kind of hardware platform, and the risk of errors, e. g. wrong debug protocol in use, can be avoided.

The objective of the invention will be solved by a method for an improved firmware deployment for a hardware platform comprising the following steps:
- creating dedicated firmware images for the hardware platform by compiling and linking sources files of an application on a host tool,
- building a firmware executable for the hardware platform,
- embedding additional information and hardware platform specific logic in the firmware images of said hardware platform, resulting in a special firmware deployment bundle, whereas the embedding is done by modifying executable and linkable format (ELF) files or by creating an archive file,
- using the special firmware deployment bundle as an executable by the host tool for loading the firmware deployment onto the hardware platform and / or using it as an input for other host tools for firmware loading, debugging and / or test stimuli on the hardware platform.

The basic idea of the invention is to create an application binary during building a concrete firmware version, which knows the hardware platform it will be running on. So, the inventive approach can be realized in two steps: Firstly, to create a special firmware deployment and secondly, additional information and logic embedded in the deployment is used.

Usually, firmware is built for a specific platform, either for real hardware or an FPGA. And it is also built with support for a very specific version of the hardware platform. So all the knowledge required to interact with the overall system can be encoded into the application binary. A hardware platform in the sense of this application is understood as a real hardware, e. g. out of silicon, or a field-programmable gate array (FPGA).

As mentioned above, firmware usually is distributed in the form of compiled machine code for a particular hardware platform, so it cannot be executed directly on a host system from where a system should be debugged or tested. To work around this, a platform agnostic representation of the "interface logic" is combined with the firmware executable.

This is a main advantage over the methods known so far. Only a single artifact has to be passed on: The firmware executable (also named as firmware image) with embedded interface logic as additional information and hardware platform specific logic. This combined artifact is then used both for loading the firmware onto a hardware platform, hence any kind of device, as well as an input for host tools to talk to said device, e. g. for firmware loading, debugging, test stimuli and so on. This reduces the risk of errors, e. g. a wrong debug protocol in use. Additionally, due to the fact that the actual logic for interfacing with the hardware platform is part of the firmware image, host tools do not need to be updated regularly, which keeps maintenance effort low and also contributes to fewer problems due to outdated tool versions in the infrastructure.

In a variant of the inventive method, the additional information and hardware platform specific logic comprise interfacing information of the hardware platform.

Any hardware platform or device specific logic can be implemented in the firmware images or firmware executable as additional information.

In another variant of the inventive method, the hardware platform is a hardware device or an FPGA.

Depending on the hardware platform special treatments of said hardware platforms are required. E. g. using an FPGA requires loading and updating ROM content as mentioned above. This can be easily solved by the inventive method, as all required treatment will be considered by the embedded additional information and is handled by the embedded script explained later.

In a further variant of the inventive method, the special firmware deployment bundle comprises a complete host tool, where a load and test application is built and published with each firmware build.

This variant could be an alternative approach, hence to deliver the complete host tools which are required with each firmware. So a load & test application could be build and published with each firmware build. However, this could pose problems as this application would need to be installed with each firmware version or at least it would be required to ensure that the application can be run in place. Depending on the complexity of the overall project setup, this could be difficult to achieve.

The inventive method that solves the above mentioned objective can be used on the consuming side in a very advantageous way. The further inventive method which uses the special firmware deployment bundle for a hardware platform generated by the method according to claims 1 to 4, comprises the following steps or is performed in the following way:
- Extracting an embedded script out of the generated special firmware deployment bundle and loading it into a runtime of a host tool,
- Interacting of the host tool with a hardware platform by forwarding any specific requests configured by the previously loaded script, wherein the host tool only provides interfaces for copying over said requests, wherein any mapping of desired commands or requests is done by the loaded script, which is delivered embedded in the special firmware deployment bundle.

In order to load the embedded script and run tests on the hardware platform later on, a host tool is needed which extract the embedded script and load it into the runtime of the host tool. The runtime or runtime environment of a host tool is understood as a program with which applications can be made executable in an unfamiliar environment by mediating between the application program and the operating system, hence the hardware platform. A host tool is usually a script engine for executing the chosen language, e. g. a JavaScript engine.

As soon as the host tool has extracted the embedded script, the host tool can interact with the hardware in question, forwarding any specific requests to the previously loaded script. This can already start with the loading procedure: Depending on whether the firmware is loaded onto an FPGA prototype or a silicon device, a special treatment for ROM contents might be added. On the silicon device, nothing is to do, but for the FPGA the ROM contents might be loaded from the firmware image and put in into the device memory on every load.

Instead of having the host tool to take care for this, the previously running script will carry out the required steps. As the script knows to which platform it belongs due to the added additional information and hardware platform specific logic, it can execute the right steps for it without any further ado. The only thing required for it to work is, that the host application needs to provide an interface for copying over the data, e. g. one for reading the compiled machine code from the image and one for writing the data into device memory. The script will then take care for the rest, i. e. finding all relevant sections to be copied in the image and loading them to the correct addresses in the device.

In a variant of the inventive method using the improved firmware deployment for a hardware platform, the method comprises a further step, where the hardware platform is brought into a mode for testing by enabling a debug mode through to the previously loaded script provided by interfaces of the host tool to the hardware platform.

As previously mentioned above, as soon as the host tool has extracted the embedded script, the host tool can interact with the hardware in question, forwarding any specific requests to the previously loaded script. Bringing a hardware platform or a device into a test or debug mode, this might involve writing "magic" values to certain device registers/memory locations or doing a proper authentication of the user, depending on the desired level of security. Here as well, the host tool does not need to know the concrete steps: If the user wants to enable debug mode, this request is passed through to the previously loaded script, which in turn runs the required steps for that particular piece of hardware. Here as well, as that is needed from the host tool is providing appropriate (generic) interfaces towards the hardware.

In a further variant of the inventive method using the improved firmware deployment for a hardware platform, the method comprises a further step, where the hardware platform is brought into a system test mode by implementing higher level commands by the previously loaded script for controlling said system test mode, wherein the interfaces between the host tool and the hardware platform remain the same.

When interacting with the device, e. g. during a system test, the script loaded before might implement certain higher level commands for driving such tests - keeping the interface on the host tool level the same, even if depending on the concrete hardware different steps have to be taken. For example, on an FPGA platform some peripherals might not be present or located at different addresses. By having the embedded script providing the interactions in an abstract way, the end user does not need to care - the actual mapping of the desired commands is done by the script delivered embedded in the firmware itself.

The inventive methods will be described in more detail using exemplary embodiments.

The appended drawings show
- Fig. 1: Inventive workflow for creating a special firmware deployment bundle with embedded additional information and hardware platform specific logic according to the invention;
- Fig. 2: Workflow for using the inventive special firmware deployment bundle with embedded additional information and hardware platform specific logic according to the invention.

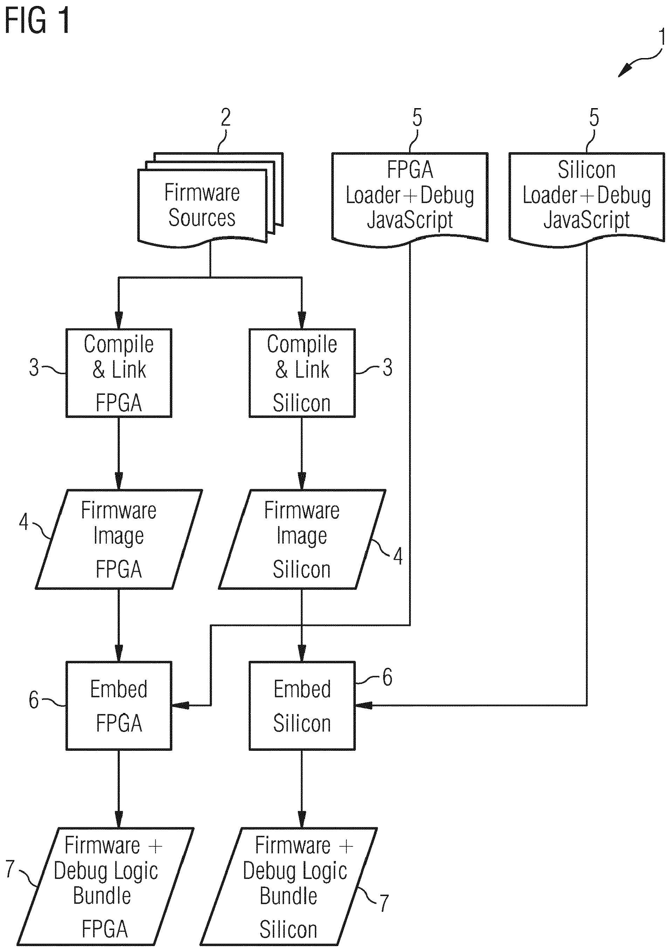

Figure 1 shows the inventive workflow 1 for creating a special firmware deployment bundle 7 with embedded additional information and hardware platform specific logic, one workflow path for using an FPGA hardware platform and one path for using a hardware platform implemented as real silicon device. Typically, a firmware for an embedded platform is written in a language like C or C++. During the build of the firmware, source files 2 of the application are taken and compiled and linked 3 into dedicated firmware images 4. Usually, for such languages, it is common to build platform specific versions for the various concrete hardware platforms that need to be supported. As shown in the examples, if the application needs to run on both an FPGA prototyping platform as well as, later during the development, a "real" silicon device, two specific firmware executables need to be built, each having the inherent knowledge about which platform it belongs to "built-in".

To aid loading and debugging these applications later on, the state-of-the-art workflow is extended by an additional step 6, where device specific logic 5 is embedded into the firmware images. This can be done by modifying ELF files, assuming that this format is used for delivery, or by creating an archive file, e. g. a zip file, which contains both the firmware image itself as well as the additional logic.

Often, the differences between platforms are quite large, so it makes sense to have the power of a high language available to represent it. For this reason, a high level programming language like JavaScript or Lua is chosen, which are typical "extension languages" for host applications, for example, JavaScript is commonly used in Web Browsers to allow web sites to provide advanced user interfaces. They typically have a very limited "standard library" available and cannot access the file system freely. Instead, the host application must provide interfaces to the script being run if such accesses are allowed.

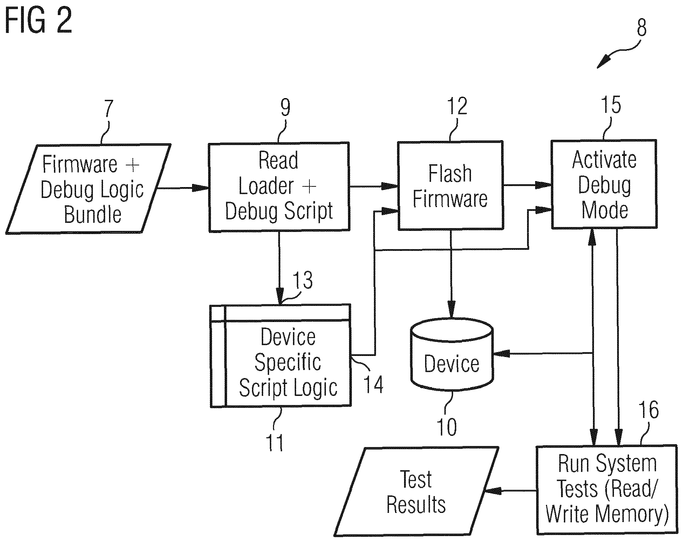

Figure 2 shows a workflow 8 for using the inventive special firmware deployment bundle 7 with embedded additional information and hardware platform specific logic on the consuming side. The embedded logic is used as described in the following.

The starting point is the firmware image with the embedded additional information and hardware platform specific logic, e. g. a debug logic, forming the special firmware deployment bundle 7. In order to load this script file and run tests on the hardware platform later on, a tool on the host, which runs the following steps, is needed:

First, the embedded script logic is extracted and loaded into the runtime of the host tool, whereas the steps marked with reference signs 9, 12 and 15 are basically actions that the host tool carries out by using the logic from the extracted script logic. The host tool usually will be a script engine for executing the chosen language, e. g. a JavaScript engine. From now on, the host tool can interact with the hardware platform 10 in question, forwarding any specific requests to the previously loaded script 11.

For example, the script can already start with the loading procedure: Depending on whether to load the firmware onto an FPGA prototype or a silicon device, e. g. a special treatment for ROM contents has to be added. On the silicon device, nothing is to do, but for the FPGA the ROM content has to be loaded from the firmware image and put in into the device memory on every load 12.

Instead of having the host tool to take care for this, the previously running script 11 will carry out the required steps. As the script 11 knows to which hardware platform 10 it belongs due to the added additional information (as the script is basically the added additional information) and hardware platform specific logic, it can execute the right steps for it without any further ado. The only thing required for it to work is, that the host application needs to provide an interface 13, 14 for copying over the data, e. g. one 13 for reading the compiled machine code from the image and one 14 for writing the data into device memory. So actually, the host tool extracts the device specific logic and loads it into some "execution engine" (e. g. a JavaScript engine). Steps that require device interaction, like loading firmware onto it, bringing a device into debug mode and so on, then are "driven" partly by the generic application logic and partly by the script logic. So, the script take care for the rest, i. e. finding all relevant sections to be copied in the image and loading them to the correct addresses in the device.

In a next possible step, a hardware platform or a device 10 could be brought into a mode where it can be used for testing or debugging 15. This might involve writing "magic" values to certain device registers/memory locations or doing a proper authentication of the user, depending on the desired level of security. Here as well, the host tool does not need to know the concrete steps: If the user wants to enable/activate debug mode 15, this request is passed through to the previously loaded script 11, which in turn runs the required steps for that particular piece of hardware. Here as well, as that is needed from the host tool is providing appropriate (generic) interfaces 13, 14 towards the hardware 10.

Finally, the same is true when later on interacting with the device, e. g. during a system test 16. The script loaded before might implement certain higher level commands for driving such tests - keeping the interface on the tool level the same, even if depending on the concrete hardware different steps have to be taken. For example, on an FPGA platform some peripherals might not be present or located at different addresses. By having the embedded script 11 providing the interactions in an abstract way, the "end user" does not need to care - the actual mapping of the desired commands is done by the script delivered embedded in the firmware itself.

The invention is targeted at internal use cases inside the development environment of embedded applications, i. e. hardware and firmware. It makes sense in projects where a certain variety of hardware platforms is expected over time and hence can reduce the overhead of rolling out new tool releases when something changes in the application interfaces.

### List of Reference Signs

- 1: Workflow for creating a special firmware deployment bundle
- 2: Source files
- 3: Compiling and linking step
- 4: Dedicated firmware image per supported type or hardware
- 5: Additional information and hardware platform specific logic
- 6: Embedding additional information and hardware platform specific logic step
- 7: special firmware deployment bundle
- 8: workflow for using the special firmware deployment bundle
- 9: read loader and debug script from the special firmware deployment bundle
- 10: hardware platform, e. g. silicon or FPGA
- 11: hardware specific script logic (running e. g. in a script logic)
- 12: load firmware onto a device
- 13: interface for reading data from the executable file by the script
- 14: interface for writing data onto the device by the script
- 15: activate test/debug mode
- 16: run system test

## Claims

1. A method for an improved firmware deployment for a hardware platform (10) comprising the following steps:
- creating dedicated firmware images for the hardware platform by compiling and linking sources files (2) of an application on a host tool,
- building a firmware executable for the hardware platform (10),
- embedding additional information and hardware platform specific logic in the firmware images of said hardware platform, resulting in a special firmware deployment bundle (7), whereas the embedding is done by modifying executable and linkable format, ELF, files or by creating an archive file,
- using the special firmware deployment bundle (7) as an executable by the host tool for loading the firmware deployment onto the hardware platform (10) and / or using it as an input for other host tools for firmware loading, debugging and / or test stimuli on the hardware platform.

2. The method for an improved firmware deployment according to claim 1, wherein the additional information and hardware platform specific logic comprise interfacing information of the hardware platform (10).

3. The method for an improved firmware deployment according to claim 1, wherein the hardware platform (10) is a hardware device or an FPGA.

4. The method for an improved firmware deployment according to claim 1, wherein the special firmware deployment bundle (7) comprises a complete host tool, where a load and test application is built and published with each firmware build.

5. A method for using a special firmware deployment bundle for a hardware platform generated by the method according to claims 1 to 4, the method comprising the following steps:
- Extracting an embedded script out of the generated special firmware deployment bundle (7) and loading it into a runtime of a host tool,
- Interacting of the host tool with a hardware platform (10) by forwarding any specific requests configured by the previously loaded script, wherein the host tool only provides interfaces for copying over said requests, wherein any mapping of desired commands or requests is done by the loaded script, which is delivered embedded in the special firmware deployment bundle (7).

6. The method for using the improved firmware deployment for a hardware platform according to claim 5, wherein the method comprises a further step, where the hardware platform (10) is brought into a mode for testing by enabling a debug mode through to the previously loaded script provided by interfaces of the host tool to the hardware platform (10).

7. The method for using the improved firmware deployment for a hardware platform according to claims 5 or 6, wherein the method comprises a further step, where the hardware platform (10) is brought into a system test (16) by implementing higher level commands by the previously loaded script for controlling said system test, wherein the interfaces between the host tool and the hardware platform (10) remain the same.
